(19) Europäisches Patentamt
European Patent Office
Office européen des brevets

(11) **EP 2 548 296 B1**

(12) **FASCICULE DE BREVET EUROPEEN**

(45) Date de publication et mention de la délivrance du brevet:
**06.05.2015 Bulletin 2015/19**

(21) Numéro de dépôt: **10716398.2**

(22) Date de dépôt: **16.03.2010**

(51) Int Cl.:
***H02M 7/217*** *(2006.01)*

(86) Numéro de dépôt international:
**PCT/FR2010/050471**

(87) Numéro de publication internationale:
**WO 2011/114007 (22.09.2011 Gazette 2011/38)**

(54) **ALIMENTATION À DÉCOUPAGE**

SCHALTNETZTEIL

SWITCHING MODE POWER SUPPLY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**23.01.2013 Bulletin 2013/04**

(73) Titulaire: **Devialet**
**75001 Paris (FR)**

(72) Inventeurs:
• **CALMEL, Pierre-Emmanuel**
**F-78000 Versailles (FR)**

• **MORONVALLE, Mathias**
**F-91430 Vauhallan (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A1- 2 157 684      FR-A1- 2 693 321**

**Description**

La présente invention concerne une alimentation à découpage, du type comportant :

- une entrée pour un courant alternatif d'entrée sous une tension d'entrée ;
- une sortie pour un courant continu de sortie et,
- successivement, depuis l'entrée vers la sortie,

  - un système d'interrupteurs commandés ;
  - un transformateur dont le primaire est relié en sortie du système d'interrupteurs commandés ;
  - un circuit de redressement connecté aux bornes d'un circuit secondaire du transformateur ; et

- un condensateur de stockage relié en parallèle aux bornes de sortie du circuit redresseur avec interposition d'une bobine, la sortie étant formée aux bornes du condensateur de stockage.

Le document FR 2.693.321 divulgue une alimentation à découpage selon le préambule de la revendication 1.
De nombreux appareils électroniques sont alimentés à partir du réseau distribuant un signal sinusoïdal au travers d'une alimentation à découpage propre à fournir un courant continu d'alimentation.
Tel est le cas par exemple pour des amplificateurs haute fidélité.
La structure classique d'une telle alimentation à découpage comprend généralement en entrée un circuit de type boost susceptible de convertir le courant sinusoïdal en courant continu sous une tension supérieure à la tension du courant sinusoïdal d'alimentation. Il est suivi d'un convertisseur courant continu-courant continu mettant en oeuvre un pont d'interrupteurs commandés suivi d'un redresseur formé d'un pont de diodes. Le pont d'interrupteurs commandés et le pont de diodes sont reliés l'un à l'autre par un transformateur.
Le circuit de type boost comporte classiquement une bobine alimentant un condensateur au travers d'une diode, l'association diode et condensateur étant monté en parallèle avec un interrupteur commandé. Cet interrupteur est ouvert suivant un rapport cyclique propre à permettre la charge du condensateur par une tension supérieure à la tension d'entrée.
Une telle alimentation à découpage comporte donc deux étages de commutation, un premier dans le circuit boost et le second dans le pont d'interrupteurs commandés. Cette double structure de commutation est à l'origine d'un rendement relativement faible de l'alimentation à découpage.
L'invention a pour but de proposer une alimentation à découpage présentant un rendement élevé.
A cet effet, l'invention a pour objet une alimentation à découpage du type précité, caractérisée en ce que le système d'interrupteurs commandés est le seul circuit entre l'entrée et la sortie à comporter des organes de commutation et en ce qu'il comporte des moyens de commande du système d'interrupteurs pour commander l'amplitude du courant d'entrée en fonction de la tension d'entrée du courant de sortie et de la tension aux bornes du condensateur de stockage.
Selon des modes particuliers de réalisation, l'alimentation comporte l'une ou plusieurs des caractéristiques suivantes :

- l'alimentation comporte des moyens de mesure du courant de sortie ;
- l'alimentation comporte des moyens d'estimation du courant de sortie seulement pendant une phase de non apport d'énergie au condensateur de stockage depuis l'entrée ;
- les moyens d'estimation du courant de sortie comportent des moyens de mesure de la chute de tension $\Delta U$ aux bornes du condensateur de stockage pendant la phase de non apport d'énergie au condensateur et des moyens de calcul du courant de sortie à partir de la vitesse de variation de la tension déterminée à partir de la chute de tension aux bornes du condensateur ;
- l'alimentation comporte des moyens de calcul de la puissance consommée en sortie, des moyens de calcul d'une amplitude de consigne du courant d'entrée en fonction de la puissance consommée en sortie et les moyens de commande du système d'interrupteurs comportant des moyens de régulation du courant d'entrée en fonction de l'amplitude de consigne du courant d'entrée ;
- les moyens de calcul de la puissance consommée sont propres à calculer une puissance consommée pour chaque demi-période du courant d'entrée ;
- les moyens de calcul de la puissance sont propres à calculer ladite puissance à partir de la somme pondérée de la puissance fournie au condensateur de stockage et de la puissance transmise en sortie à la charge ; et
- le système d'interrupteurs forme un pont.

L'invention a également pour objet un amplificateur haute fidélité comportant un étage d'amplification et une alimentation à découpage telle que définie ci-dessus.

L'invention sera mieux comprise à la lecture de la description qui va suivre, donnée uniquement à titre d'exemple et faite en se référant aux dessins sur lesquels :

- la figure 1 est un circuit schématique de l'alimentation à découpage selon l'invention intégrée dans un amplificateur ;
- la figure 2 est un schéma synoptique du mode de commande des interrupteurs mis en oeuvre dans l'alimentation illustrée sur la figure 1.
- la figure 3 est une courbe illustrant la tension et le courant d'entrée de l'alimentation à découpage ;

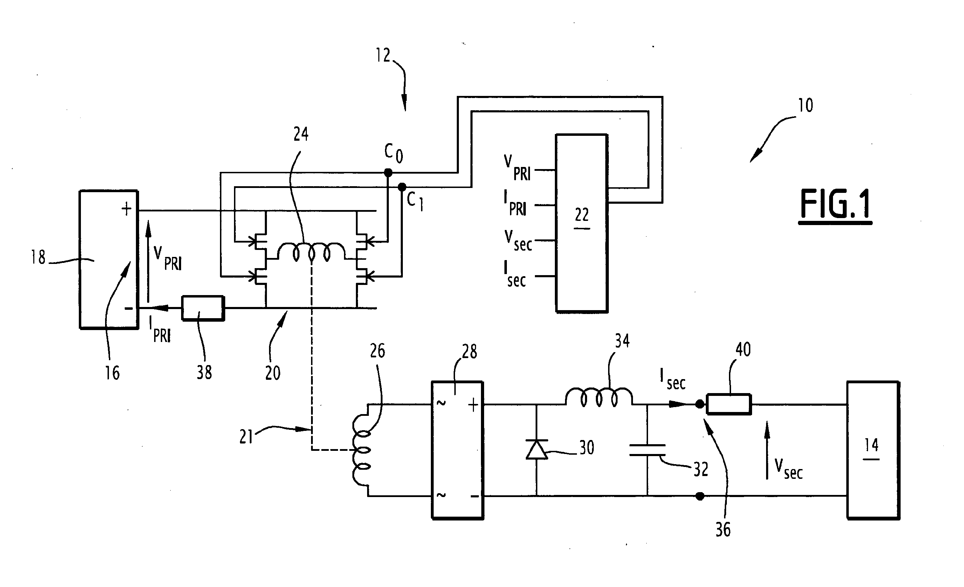

Sur la figure 1 est illustré un amplificateur haute fidélité 10 comportant une alimentation à découpage 12 alimentant un étage d'amplification 14. L'étage d'amplification 14 de tout type adapté est décrit par exemple dans la demande de brevet FR 2.873.872.

L'alimentation à découpage 12 présente une entrée 16 propre à être reliée à un réseau d'alimentation 18 fournissant un courant sinusoïdal par exemple de 220 V à une fréquence de 50 ou 60 Hz.

La tension d'entrée est notée $V_{PRI}$ et l'intensité traversant l'entrée 16 est noté $I_{PRI}$. L'entrée 16 est reliée directement, sans interposition d'un circuit de type boost à l'entrée d'un pont d'interrupteurs 20 dont la sortie est reliée à un tranformateur 21.

Comme connu en soi, le pont d'interrupteurs 20 comporte deux branches parallèles comportant chacune deux interrupteurs commandables montés en série, ces deux branches étant reliées entre les deux bornes d'entrée 16. Les points de connexion des interrupteurs d'une même branche constituant la sortie du pont d'interrupteurs.

Chacun des interrupteurs est constitué par exemple d'un transistor de type MOS et ces transistors sont commandés par un circuit de commande 22.

Le transformateur 21 comporte un circuit primaire 24 relié entre les deux interrupteurs commandés montés en série de chaque branche et un circuit secondaire 26 relié aux bornes d'entrée d'un circuit de redressement 28 formé par exemple d'un pont de diodes connu en soi.

Une diode 30 est reliée entre les deux bornes de sortie du pont de diodes 28.

La sortie du pont de diodes 28 est reliée également à un condensateur 32 de stockage au travers d'une bobine 34. Cette bobine est disposée entre la cathode de la diode 30 et l'une des bornes du condensateur 32. La sortie notée 36 de l'alimentation à découpage est formée aux bornes du condensateur 32. Le courant de sortie est noté $I_{sec}$ alors que la tension de sortie est notée $V_{sec}$.

Des moyens de mesure de l'intensité d'entrée $I_{PRI}$ et de l'intensité de sortie $I_{sec}$ sont prévus en entrée et en sortie de l'alimentation à découpage. Ils sont formés par exemple d'une résistance respectivement 38 et 40 aux bornes de laquelle la tension est mesurée, cette tension étant proportionnelle à l'intensité circulant dans la résistance.

Les interrupteurs commandés opposés des deux branches du pont 20 ont leurs bases reliées ensemble pour recevoir une même commande notée respectivement $C_o$ et $C_1$.

Le circuit de commande 22 reçoit, en entrée, par tout moyen adapté la tension d'entrée $V_{PRI}$, l'intensité d'entrée $I_{PRI}$, la tension de sortie $V_{sec}$ et l'intensité de sortie $I_{sec}$.

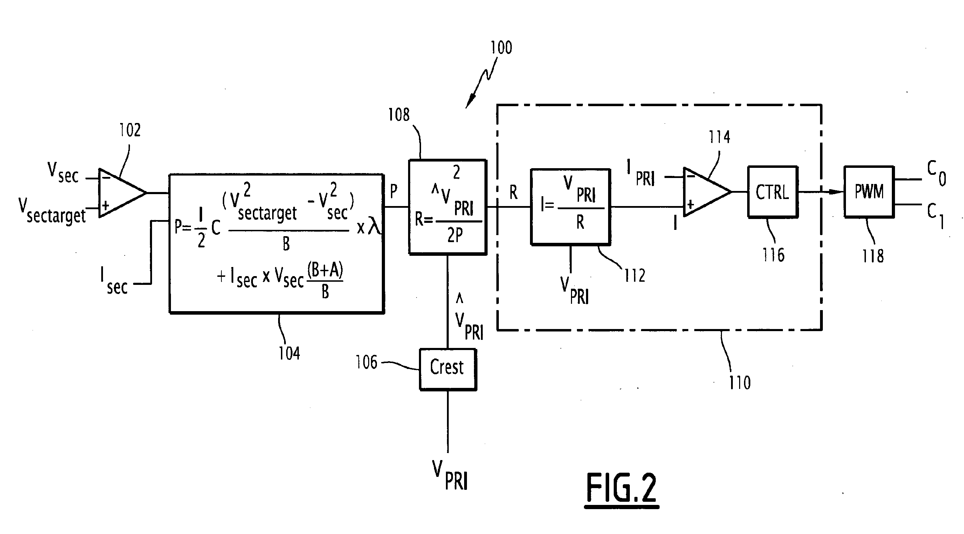

Sur la figure 2 est illustrée la chaîne de régulation 100 mise en oeuvre par circuit de commande 22. L'alimentation à découpage est destinée à fournir une tension de consigne constante notée $V_{sectarget}$. Celle-ci est par exemple égale à 50 V. Cette tension est celle mesurée aux bornes du condensateur de stockage 32.

Le circuit de commande 22 est propre à fournir les deux signaux de commande $C_0$ et $C_1$ appliqués respectivement aux interrupteurs commandés diamétralement opposés du pont 20.

Le régulateur 100 illustré sur la figure 2 comporte en entrée un comparateur 102 recevant la tension de consigne $V_{sectarget}$ et la tension mesurée en sortie $V_{sec}$. Le régulateur reçoit en outre l'intensité de sortie $I_{sec}$. Suivant un premier mode de réalisation, celle-ci est mesurée en continu grâce à la résistance 40.

Un étage 104 calcule la puissance moyenne P qui sera consommée par l'alimentation au cours de la demi-période secteur suivante. Cette puissance est constituée de la somme de deux termes : le premier représente la puissance à fournir au condensateur 32 pour passer de la tension actuelle Vsec à la tension de consigne Vsectarget, tandis que le second représente une estimation de la puissance à fournir à la charge 14.

$$ P = \frac{1}{2} C \frac{(V_{sectarget}^2 - V_{sec}^2)}{B} \times \lambda + I_{sec} V_{sec} \frac{(B + A)}{B} $$

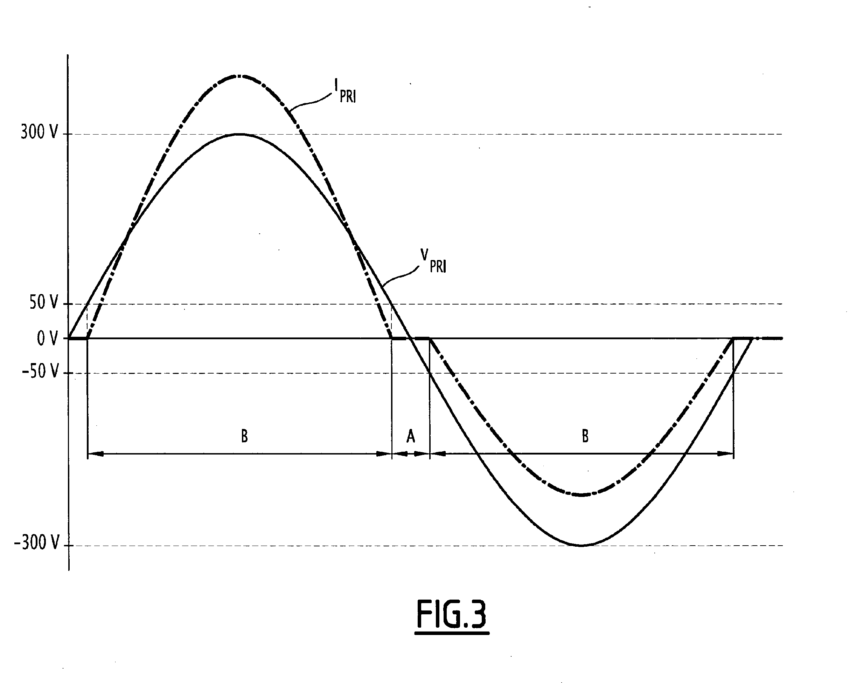

où $\lambda$ est un coefficient de pondération de préférence strictement inférieur à 1,
C est la capacité du condensateur 32, et
A et B sont les durées respectivement des périodes de non apport et d'apport d'énergie au condensateur de stockage 32 sur une demi-période du signal d'alimentation. Les durées A et B sont illustrées sur la figure 3.

Ainsi, la puissance P est calculée une fois pour chaque demi-période du signal d'alimentation soit toutes les 10 millisecondes pour un signal de 50 Hz.

Un étage 106 de calcul de la tension crête $^\wedge V_{PRI}$ reçoit en entrée la tension d'entrée $V_{PRI}$.

Un étage 108 de calcul de la résistance équivalente est relié en sortie des étages 104 et 106 et est propre à calculer la résistance équivalente R à partir du quotient du carré de la tension crête $^\wedge V_{PRI}$ divisé par le double de la puissance P calculée en 104.

La résistance équivalente R est introduite dans une boucle de régulation secondaire 110 comportant en entrée un étage 112 de calcul de l'intensité I qui doit être consommée à l'entrée 18 pour compenser la décharge du condensateur 32 et l'alimentation de la charge 14. Cette intensité I est donnée par le quotient de la tension d'entrée $V_{PRI}$ par la résistance précédemment déterminée R.

L'intensité I est adressée à un comparateur 114 recevant sur une entrée l'intensité d'entrée $I_{PRI}$ et sur l'autre entrée l'intensité calculée I. La sortie du comparateur 114 est reliée à un étage de commande 116, lequel pilote, à partir de la différence d'intensité I-$I_{PRI}$ un régulateur à modulation de largeur d'impulsions 118 définissant et appliquant les consignes $C_0$ et $C_1$ comme connu en soi.

Du fait de la présence du condensateur 32, lequel est normalement chargé avec une tension égale ou proche de la tension de consigne $V_{sectarget}$ prise égale à 50 volts dans l'exemple considéré, le réseau n'est susceptible d'apporter de l'énergie que lorsque la valeur absolue de la tension fournie par le réseau est supérieure à 50 volts. Lorsque la tension du réseau est comprise entre -50 et +50V aucun courant n'est prélevé sur le réseau.

Sur la figure 3 sont représentés en trait continu la tension d'alimentation $V_{PRI}$ et en trait mixte l'intensité du courant $I_{PRF}$ circulant au travers de l'entrée 16. On constate sur cette figure, que l'intensité est nulle lorsque la tension d'alimentation $V_{PRI}$ est comprise entre - 50 volts et + 50 volts.

Ainsi, pour chaque période du signal d'alimentation, deux phases de non conduction de durée A existent, ces phases correspondant au temps pendant lequel la tension d'entrée est comprise entre 50 et -50 volts. Ces deux phases de non conduction sont séparées par des phases de conduction de durée B pendant lesquelles les interrupteurs du pont 20 sont commandés par l'unité 118 en fonction d'un rapport cyclique prédéterminé.

La chaîne de régulation 100 est telle que ce rapport cyclique est calculé pendant chaque phase de non conduction de durée A et appliqué pendant la phase de conduction suivante de durée B afin de compenser pendant cette phase de conduction exactement la variation de puissance du condensateur de stockage et la puissance transmise en sortie à la charge.

Lors d'une phase de non conduction A, le courant I à fournir pendant la phase de conduction suivante B est calculé par les étages 102 à 112 à partir de la formule $I = \dfrac{V_{PRI}}{^\wedge V_{PRI}^2 B}\left(\lambda C\left((V_{sectarget}^2 - V_{sec}^2) + 2I_{sec}\,V_{sec}\,(B+A)\right)\right)$

puis le rapport cyclique est déterminé par l'étage 116 à partir de l'intensité d'alimentation $I_{PRI}$ afin de piloter les interrupteurs du pont 20 par l'étage de pilotage 118 pendant la phase de conduction B suivante.

Suivant un second mode de réalisation, la résistance 40 est supprimée et le courant $I_{sec}$ est supposé constant sur chaque période du courant d'alimentation et est estimé seulement lors de chaque phase de non conduction de durée A.

A cet effet, lors de chaque phase de non conduction, une chute de tension $\Delta U$ aux bornes du condensateur de stockage 32 est mesurée et le courant de sortie $I_{sec}$ est déterminé par la formule $I_{sec} = C\,\dfrac{\Delta U}{\Delta t}$

où C est la capacité du condensateur 32, et

$\Delta t$ est la période d'observation de la chute de tension.

Les autres étapes de commande sont identiques.

On conçoit qu'avec une telle structure d'alimentation à découpage, le rendement est élevé grâce au recours à un unique étage de commutation. De plus, ce rendement est d'autant plus élevé que seule l'énergie consommée par la charge est réellement prélevée sur le réseau d'alimentation grâce à la loi de pilotage du pont d'interrupteurs mis en oeuvre.

En outre, une telle alimentation à découpage présente, vue du réseau, une caractéristique proche de la caractéristique d'une résistance puisque, durant toute la période B, le courant consommé sur la charge 18 est proportionnel à la tension présente sur la charge 18, donc le courant suit la loi d'ohm Ipri = Vpri/ R.

**Revendications**

**1.** Alimentation à découpage (10) comportant :

- une entrée (16) pour un courant alternatif d'entrée ($I_{PRI}$) sous une tension d'entrée ($V_{PRI}$) ;

- une sortie (36) pour un courant continu de sortie ($I_{sec}$) et,
- successivement, depuis l'entrée vers la sortie,

- un système d'interrupteurs commandés (20) ;
- un transformateur (21) dont le primaire (24) est relié en sortie du système d'interrupteurs commandés (20) ;
- un circuit de redressement (28) connecté aux bornes d'un circuit secondaire (26) du transformateur ; et
- un condensateur de stockage (32) relié en parallèle aux bornes de sortie du circuit redresseur (28) avec interposition d'une bobine (34), la sortie (36) étant formée aux bornes du condensateur de stockage (32),

**caractérisée en ce que** le système d'interrupteurs commandés (20) est le seul circuit entre l'entrée (16) et la sortie (36) à comporter des organes de commutation et **en ce qu'**il comporte des moyens (22) de commande du système d'interrupteurs (20) pour commander l'amplitude du courant d'entrée ($I_{PRI}$) en fonction de la tension d'entrée ($V_{PRI}$) du courant de sortie ($I_{sec}$) et de la tension ($V_{sec}$) aux bornes du condensateur de stockage (32).

2. Alimentation selon la revendication 1, **caractérisée en ce qu'**elle comporte des moyens (40) de mesure du courant de sortie ($I_{sec}$).

3. Alimentation selon la revendication 1, **caractérisée en ce qu'**elle comporte des moyens d'estimation du courant de sortie ($I_{sec}$) seulement pendant une phase de non apport d'énergie au condensateur de stockage (32) depuis l'entrée (16).

4. Alimentation selon la revendication 3, **caractérisée en ce que** les moyens d'estimation du courant de sortie ($I_{sec}$) comportent des moyens de mesure de la chute de tension $\Delta U$ aux bornes du condensateur de stockage (32) pendant la phase de non apport d'énergie au condensateur et des moyens de calcul du courant de sortie ($I_{sec}$) à partir de la vitesse de variation de la tension déterminée à partir de la chute de tension aux bornes du condensateur.

5. Alimentation selon l'une quelconque des revendications précédentes, **caractérisée en ce qu'**elle comporte des moyens (104) de calcul de la puissance (P) consommée en sortie (36), des moyens de calcul d'une amplitude de consigne du courant d'entrée ($I_{PRI}$) en fonction de la puissance consommée en sortie (36) et les moyens (22) de commande du système d'interrupteurs (20) comportant des moyens de régulation (116) du courant d'entrée ($I_{PRI}$) en fonction de l'amplitude de consigne du courant d'entrée ($I_{PRI}$).

6. Alimentation selon la revendication 5, **caractérisée en ce que** les moyens (104) de calcul de la puissance (P) consommée sont propres à calculer une puissance consommée (P) pour chaque demi-période du courant d'entrée ($I_{PRI}$).

7. Alimentation selon la revendication 5 ou 6, **caractérisée en ce que** les moyens (104) de calcul de la puissance (P) sont propres à calculer ladite puissance (P) à partir de la somme pondérée de la puissance fournie au condensateur de stockage et de la puissance transmise en sortie (36) à la charge (14).

8. Alimentation selon l'une quelconque des revendications précédentes, **caractérisée en ce que** le système d'interrupteurs (20) forme un pont.

9. Amplificateur (10) comportant un étage d'amplification (14) et une alimentation à découpage (12) selon l'une quelconque des revendications précédentes.

**Patentansprüche**

1. Schaltnetzteil (10), das aufweist:

- einen Eingang (16) für einen Eingangswechselstrom ($I_{PRi}$) mit einer Eingangsspannung ($V_{PRI}$),
- einen Ausgang (36) für einen Ausgangsgleichstrom ($I_{sec}$) und,
- aufeinanderfolgend vom Eingang zum Ausgang,

- ein System gesteuerter Unterbrecher (20),
- einen Transformator (21), dessen Primärkreis (24) am Ausgang des Systems gesteuerter Unterbrecher (20) verbunden ist,

**EP 2 548 296 B1**

- eine an die Klemmen eines Sekundärkreises (26) des Transformators angeschlossene Gleichrichteranlage (28) und

- einen Blockkondensator (32), der parallel mit den Ausgangsklemmen der Gleichrichteranlage (28) mit Zwischenstellung einer Spule (34) verbunden ist, wobei der Ausgang (36) an den Klemmen des Blockkondensators (32) gebildet ist,

**dadurch gekennzeichnet, dass** das System gesteuerter Unterbrecher (20) der einzige Kreis zwischen dem Eingang (16) und dem Ausgang (36) ist, der Umschaltorgane aufweist und dass es Steuermittel (22) des Unterbrechersystems (20) aufweist, um die Amplitude des Eingangsstroms ($I_{PRI}$) in Abhängigkeit von der Eingangsspannung ($V_{PRI}$) des Ausgangsstroms ($I_{sec}$) und von der Spannung ($V_{sec}$) an den Klemmen des Blockkondensators (32) zu steuern.

2. Netzteil nach Anspruch 1, **dadurch gekennzeichnet, dass** es Messmittel (40) des Ausgangsstroms ($I_{sec}$) aufweist.

3. Netzteil nach Anspruch 1, **dadurch gekennzeichnet, dass** es Schätzmittel des Ausgangsstroms ($I_{sec}$) nur während einer Phase der Nichtzuführung von Energie an den Blockkondensator (32) vom Eingang (16) aufweist.

4. Netzteil nach Anspruch 3, **dadurch gekennzeichnet, dass** die Schätzmittel des Ausgangsstroms ($I_{sec}$) Messmittel des Spannungsabfalls ∆U an den Klemmen des Blockkondensators (32) während der Phase der Nichtzuführung von Energie an den Kondensator und Berechnungsmittel des Ausgangsstroms ($I_{sec}$) ausgehend von der Geschwindigkeit der Änderung der Spannung, die ausgehend vom Spannungsabfall an den Klemmen des Kondensators bestimmt wird, aufweisen.

5. Netzteil nach einem der vorangehenden Ansprüche, **dadurch gekennzeichnet, dass** es Berechnungsmittel (104) der verbrauchten Leistung (P) am Ausgang (36), Berechnungsmittel einer Referenzamplitude des Eingangsstroms ($I_{PRI}$) in Abhängigkeit von der verbrauchten Leistung am Ausgang (36) und die Steuermittel (22) des Unterbrechersystems (20), die Einstellmittel (116) des Eingangsstroms ($I_{PRI}$) in Abhängigkeit von der Referenzamplitude des Eingangsstroms ($I_{PRI}$) aufweisen, aufweist.

6. Netzteil nach Anspruch 5, **dadurch gekennzeichnet, dass** die Berechnungsmittel (104) der verbrauchten Leistung (P) imstande sind, eine verbrauchte Leistung (P) für jede Halbperiode des Eingangsstroms ($I_{PRI}$) zu berechnen.

7. Netzteil nach Anspruch 5 oder 6, **dadurch gekennzeichnet, dass** die Berechnungsmittel (104) der Leistung (P) imstande sind, die Leistung (P) ausgehend von der gewichteten Summe der an den Blockkondensator gelieferten Leistung und der am Ausgang (36) an die Last (14) übertragenen Leistung zu berechnen.

8. Netzteil nach einem der vorangehenden Ansprüche, **dadurch gekennzeichnet, dass** das Unterbrechersystem (20) eine Brücke bildet.

9. Verstärker (10), der eine Verstärkerstufe (14) und ein Schaltnetzteil (12) nach einem der vorangehenden Ansprüche aufweist.

**Claims**

1. A switched power supply (10), comprising:

- an input (16) for an AC input current ($I_{PRI}$) under an input voltage ($V_{PRI}$);
- an output (36) for a DC output current ($I_{sec}$), and
- successively, from the input to the output,

- a system of controlled breaker switches (20);
- a transformer (21) whereof the primary (24) is linked at the output of the system of controlled breaker switches (20);
- a rectifying circuit (28) connected across the terminals of a secondary circuit (26) of the transformer; and
- a storage capacitor (32) linked in parallel across the output terminals of the rectifier circuit (28) with interposition of a coil (34), the output (36) being formed across the terminals of the storage capacitor (32),

**characterized in that** the system of controlled breaker switches (20) is the only circuit between the input (16)

**6**

and the output (36) to comprise switching members and **in that** it comprises means (22) for controlling the system of breaker switches (20) so as to control the amplitude of the input current ($I_{PRI}$) as a function of the input voltage ($V_{PRI}$) of the output current ($I_{sec}$) and of the voltage ($V_{sec}$) across the terminals of the storage capacitor (32).

2. The power supply according to claim 1, **characterized in that** it comprises means (40) for measuring the output current ($I_{sec}$).

3. The power supply according to claim 1, **characterized in that** it comprises means for estimating the output current ($I_{sec}$) only during a phase not supplying energy to the storage capacitor (32) from the input (16).

4. The power supply according to claim 3, **characterized in that** the means for estimating the output current ($I_{sec}$) comprise means for measuring the voltage drop $\Delta U$ across the terminals of the storage capacitor (32) during the phase not supplying energy to the capacitor and means for calculating the output current ($I_{sec}$) from the variation speed of the voltage determined from the voltage drop at the terminals of the capacitor.

5. The power supply according to any one of the preceding claims, **characterized in that** it comprises means (104) for calculating the power (P) consumed at the output (36), means for calculating a reference amplitude of the input current ($I_{PRI}$) as a function of the power consumed at the output (36), and control means (22) for the system of breaker switches (20) comprising means (116) for regulating the input current ($I_{PRI}$) as a function of the reference amplitude of the input current ($I_{PRI}$).

6. The power supply according to claim 5, **characterized in that** the means (104) for calculating the consumed power (P) are able to calculate a consumed power (P) for each half-period of the input current ($I_{PRI}$).

7. The power supply according to claim 5 or 6, **characterized in that** the means (104) for calculating the power (P) can calculate said power (P) from the weighted sum of the power supplied to the storage capacitor and the power transmitted in output (36) to the charge (14).

8. The power supply according to any one of the preceding claims, **characterized in that** the system of breaker switches (20) forms a bridge.

9. An amplifier (10) comprising an amplification stage (14) and a switched power supply (12) according to any one of the preceding claims.

**FIG.1**

FIG.2

EP 2 548 296 B1

FIG.3

**EP 2 548 296 B1**

## RÉFÉRENCES CITÉES DANS LA DESCRIPTION

**Documents brevets cités dans la description**

- FR 2693321

- FR 2873872